# EUROPEAN PATENT SPECIFICATION

(11) **EP 1 129 770 B1**
(45) Date of publication and mention of the grant of the patent: **22.12.2004**
(21) Application number: 01102796.8
(22) Date of filing: 09.02.2001
(51) Int. Cl.: B01F 17/52, C08F 2/16, C09D 4/00, B01F 17/00

(54) **Reactive surfactant composition**
Reaktive oberflächenaktive Zusammensetzung
Composition tensio-active réactive

(30) Priority: 10.02.2000 JP 2000033804
(43) Date of publication of application: 05.09.2001
(73) Proprietor: KAO CORPORATION, Chuo-ku, Tokyo (JP)
(72) Inventor: Ishikawa, Yoshinobu, Wakayama-shi, Wakayama (JP); Sawada, Hiroki, Wakayama-shi, Wakayama (JP); Ishii, Yasuo, Wakayama-shi, Wakayama (JP)
(74) Representative: HOFFMANN - EITLE

(56) References cited:
- DE-A- 3 317 336
- US-A- 4 224 455
- US-A- 5 348 998

## Description

### Technical Field

The present invention relates to a reactive surfactant composition and a process for producing a polymer emulsion using the reactive surfactant composition.

### Prior Art

In an emulsion polymerization of unsaturated monomers or vinyl monomers such as acrylate esters and styrene, there have been formerly used anionic surfactants such as alkyl sulfate salts, alkyl benzene_sulfonate salts and polyoxyethylene alkyl(aryl)ether sulfate salts, and nonionic surfactants such as polyoxyethylene alkyl(aryl)ethers and copolymers of ethylene oxide/propylene oxide as emulsifiers. In the emulsion polymerization, the emulsifier not only is involved in the formation of the polymer particles and the dispersion stability but also influences the mechanical stability, chemical stability, freezing stability and storage stability of the polymer emulsion. Further, therein, the emulsifier gives a remarkable influence on the emulsion property such as the particle diameter, viscosity and foaming height of the polymer emulsion as well as, when it is formed into a film, the film property such as the water resistance, moisture resistance, thermostability, tackiness and adhesion. The polymer film is formed at drying of the polymer emulsion, which is used for a paint, adhesive or the like. However, it is pointed out that the emulsifier remaining in the polymer film cause to deteriorate the water resistance, tackiness, weathering resistance, thermostability, etc. Further, when a synthetic rubber is produced from polymer emulsion (latex), it is pointed out a problem that waste water at taking out the polymer from the polymer emulsion by salting out contains the emulsifier so as to increase the burden on treating the waste water.

As a means for solving such drawbacks, there have been proposed various patents relating to the use of reactive surfactants. For example, there are JP-B 49-46291, JP-A 58-203960, JP-A 62-104802, JP-A 4-53802, etc. However, when such a reactive surfactant is used alone as the emulsifier for emulsion polymerization, the polymerization-stability is often insufficient. Accordingly, they have a problem that a conventional (non-reactive) emulsifier must be used together even at sacrificing the effect such as improvement of the water resistance. The polymerization-stability may be improved by increasing the amount of the reactive surfactant used but in this occasion also lowers the water resistance. Further, JP-A 7-228613 mentions the reactive surfactant but does not describe a critical micelle concentration (CMC) thereof. US-A-4224455 refers to sulfonated alkoxylated alkyl arylol maleic reactive surfactants useful in emulsion polymerisation processes. The reactive surfactants are comprised of ring sulfonated half esters of maleic anhydride with alkoxylated alkyl arylols. The critical micelle concentration (CMC) is about 0.001 mol/l.

### Disclosure of the Invention

The object of the present invention is to provide a reactive surfactant composition being able to solve the above-mentioned problem and to provide a process for producing a polymer emulsion having the good polymerization-stability without coarsening the particle diameter.

The present invention provides a reactive surfactant composition comprising (a) a reactive surfactant having one reactive group selected from the group of a vinyl group, an allyl group and a group having the formula (1) and one anionic hydrophilic group in the molecule thereof, having a critical micelle concentration (CMC) in the range between 0.02 mol/L and 0.2 mol/L and (b) a reactive surfactant having one reactive group selected from the group of a vinyl group, an allyl group and a group having the formula (1) and one anionic hydrophilic group in the molecule thereof, having a critical micelle concentration (CMC) in the range between 0.0005 mol/L and 0.005 mol/L, at a molar ratio of (a) to (b) in the range between 5/95 and 60/40: 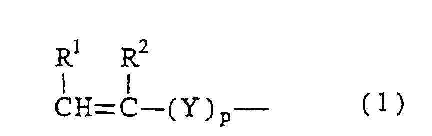 in which R¹ and R² are hydrogen or -CH₂X and are not the same as each other; and X is hydrogen or a substituent; Y is carbonyl group or methylene group; and p is zero or 1.

The present invention is characterized by combination of at least two different reactive surfactants in view of a CMC value. The surfactant composition of the present invention is very useful and advantageous as an emulsifier for emulsion polymerization.

It is preferable that the reactive surfactants have a molecular weight of 2000 or less.

The molar ratio of (a) to (b) ranges preferably between 10/90 and 40/60.

The present invention also provides use of the surfactant composition defined above as an emulsifier for emulsion polymerization. It further provides a method of conducting an emulsion polymerization in the presence of the surfactant composition as defined above. In the use and method of the invention, the surfactant composition is preferably added in an amount of 0.1 to 20 parts by weight per 100 parts by weight of the monomer(s).

The present invention relates furthermore to a paint composition comprising a pigment and the polymer emulsion obtained by the method for emulsion polymerization as defined above.

The reactive surfactant composition of the present invention makes the polymerization-stability very good when used for producing the polymer emulsion so that the polymerization can be smoothly proceeded even in no combination with a conventional (non-reactive) emulsifier.

The reactive surfactant in the present invention is a compound having one reactive group which is free radically polymerizable, one anionic hydrophilic group and one or more hydrophobic groups for being surface-active in the molecule. When there are two or more reactive groups, the surfactant gives a remarkable influence on the physical property of the polymer in the emulsion because of their crosslinking action and then can not be used. The reactive group in the present invention is a vinyl group, allyl group or a group having the formula (1).

In the group having the formula (1), a substituent represented by (designated by) X may be a lower alkyl group such as methyl and ethyl, besides a group of -R, -OR, -CO-OR, -CO-NHR (in which R represents a hydrophobic group described later) or the like, in which the group containing the hydrophobic group R exists as R¹ or R² in the reactive group.

Examples of the reactive group having the formula (1) can include methacryloyl group (R¹=H, R²=CH₃), crotonoyl group (R¹=CH₃, R²=H), itaconoyl group (R¹=H, R²= -CH₂CO-) and α-alkyl or alkenyl acryloyl group (R¹=H, R²= alkyl or alkenyl group having 4 to 22 carbon atoms) in case p=1 and Y is carbonyl group; methallyl group (R¹=H, R²=CH₃), 2-ethylallyl group (R¹=H, R²=C₂H₅) and 2-butenyl group (R¹=CH₃, R²=H) in case p=1 and Y is methylene group; and propenyl group (R¹=CH₃, R²=H) and isopropenyl group (R¹=H, R²=CH₃) in case p=0.

As the reactive group, allyl group, methallyl group, methacryloyl group, crotonoyl group, itaconoyl group, propenyl group, isopropenyl group are preferable since both polymerizability and storage stability of the compound are easily satisfied. The reactive group of the present invention don't include any one of acryloyl group (Y=CO, p=1, R¹=R²=H) because of the polymerization rate being too fast, fumaroyl group and maleoyl group (-CO-CH=CHCO-) because of the polymerization rate being too slow.

In the present invention, examples of the anionic hydrophilic group include -COOM (in which M represents a counter ion such as an alkali metal ion of sodium or potassium, and ammonium ion which may be substituted by an alkyl group having 1 to 4 carbon atoms, hereinafter),
-SO₃M, -O-SO₃M, -O-PO(OM)-O-, -O-(CH₂CH₂O)ₙ-(CH₂)ₖ-COOM (in which n is a number showing an average number of added moles of ethylene oxide and k is an integer of 1 to 3, hereinafter), -O-(CH₂-CH₂O)ₙ-SO₃M and -O-(CH₂CH₂O)ₙ-PO(-OM)-O-. In case of using an anionic hydrophilic group bonded with polyoxyethylene group, n of the average number of added moles is preferably not more than 50 and particularly preferably not more than 20 in view of polymerization-stability.

In the reactive surfactant of the present invention, the reactive group may be integrated with the anionic hydrophilic group to be a group such as substituted acrylate salts, methacrylate salts, crotonate salts and itaconate salts.

It is natural that the optimum anionic hydrophilic group of the reactive surfactant is different depending on use of the polymer emulsion, operation for the emulsion polymerization, monomer composition to be used, or the other conditions. For example, at producing the synthetic rubber by taking out crumb from polymer emulsion, the reactive surfactant having -COOM as the anionic hydrophilic group is preferable, since the polymer can be easily separated from water by agglomeration with acid. Further, at producing the emulsion such as a used one for paints in which a pigment is to be blended, an anionic hydrophilic group containing polyoxyethylene group is preferable for improving the stability during kneading with the pigment.

The hydrophobic group of the reactive surfactant in the present invention includes a monovalent or bivalent hydrocarbon group, besides a perfluoroalkyl group, a fluoroalkyl group wherein a portion of hydrogen atoms in the alkyl group is substituted with fluorine, and a group having an oligosiloxane structure such as 3-(trimethyl silyloxydimethylsilyl)propyl group and 3-(bis(trimethyl silyloxy)methylsilyl)propyl group. The specific examples of the monovalent hydrocarbon may be a linear or branched alkyl or alkenyl group having 3 or more carbon atoms, a cycloalkyl group, a cycloalkenyl group, an alkyl or alkenyl group-substituted cycloalkyl or cycloalkenyl group, an aryl group, an alkylaryl group. Specific examples of the bivalent hydrocarbon group may be a polymethylene group having 3 or more carbon atoms (-(CH₂)ₘ-, m is a integer of 3 or more), an alkylene group, a cycloalkylene group which may be substituted with an alkyl group, and an arylene group which may be substituted with an alkyl group. Aliphatic hydrocarbon group having its excellent biodegradability is preferable in consideration of discharge from waste water to environments even although most of them become a part of the polymers in reaction. Further, a linear or mono-branched alkyl or alkenyl group is particularly preferable. 2 or more hydrophobic groups may be introduced in one molecule.

CMC of the surfactant is mainly determined based on the balance between the hydrophobic group(s) and the hydrophilic group (s) but is rather influenced by the hydrophobic group than the hydrophilic group. It has been known that CMC becomes about 1/2 on every increase of -CH₂- group in case of the mono-ionic surfactant having the linear alkyl group as the hydrophobic group. CMC can be easily controlled by changing the structure of the hydrophobic group in the surfactant. When the hydrophobic group is a linear alkyl group, an aimed CMC can be often obtained when the alkyl group of the component (a) has 6 to 10 carbon atoms and (b) has 12 to 16 carbon atoms.

The reactive surfactant of the present invention is produced by chemically bonding the reactive group, the anionic hydrophilic group and the hydrophobic group(s) described above directly or indirectly with a bonding group(s). Specific examples of the bonding group can include a bivalent group such as -O-, -NH-, -CH₂-, -O-CO-CH₂-, -NH-CO-CH₂-, -OCH₂CH(OH)CH₂O-, -COCH₂CH₂CO- and polyoxyethylene group not directly bonded with the hydrophilic group; a trivalent group such as 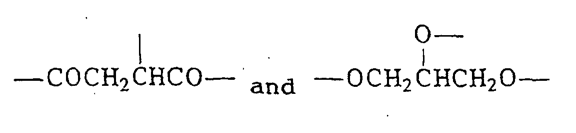 ; and a group having two or more bonding groups in combination.

The molecular weight of the reactive surfactant in the present invention is preferably not more than 2000 and particularly preferably not more than 1000 in order to obtain the emulsion having its higher polymerization-stability and smaller particle diameter.

In the present invention, the component (a) is a reactive surfactant having CMC in the range between 0.02 mol/L and 0.2 mol/L of which alone one or two or more may be used. Further, the component (b) is a reactive surfactant having CMC in the range between 0.0005 mol/L and 0.005 mol/L, of which alone one or two or more may be used. In the present invention, CMC is a value measured by a conductmeric titration.

It is an essential condition for producing the composition of the present invention to select a reactive surfactant being capable of satisfying the CMC range for the component (a) and the component (b) by controlling CMC of the reactive surfactant, even if any structure is selected for the reactive group, anionic hydrophilic group, hydrophobic group and bonding group if necessary.

The molar ratio of the component (a) to the component (b), namely (a)/(b), in the composition of the present invention is 5/95 to 60/40, preferably 10/90 to 40/60 and particularly preferably 15/85 to 30/70. If the molar ratio of (a)/(b) is less than 5/95 or more than 60/40, the polymerization-stability is insufficient and, in addition, if it exceeds 60/40, the particle diameter of the polymer emulsion is increased.

. Specific examples of the monomer(s) used at producing the polymer emulsion with the reactive surfactant composition of the present invention may be aromatic vinyls such as styrene, α-methyl styrene and chlorostyrene; (meth)acrylate esters such as methyl (meth)acrylate, butyl (meth)acrylate, and 2-ethylhexyl (meth)acrylate; halogenated vinyls such as vinyl chloride and vinyl bromide; halogenated vinylidenes such as vinylidene chloride; vinyl esters such as vinyl acetate and vinyl propionate; α,β-unsaturated carboxylic acids such as (meth)acrylic acid and itaconic acid; α,β-unsaturated carboxylic acid amides such as acrylamide; α,β-unsaturated nitriles such as (meth)acrylonitrile; conjugated dienes such as butadiene, chloroprene and isoprene; besides ethylene, a maleic acid derivative, an itaconic acid derivative, and a cross linking compound having two or more polymerizable groups . These monomers may be used alone or as a mixture of two or more thereof.

There is no particular limitation to the producing method of the polymer emulsion with the reactive surfactant of the present invention. There can be used a publicly known emulsion polymerization method such as a monomer addition method, a batch method or an emulsion addition method.

The polymerization initiator may be a publicly known one. . For example, there may be an inorganic peroxide such as potassium persulfate and ammonium persulfate; an organic peroxide such as t-butyl peroxide, cumene hydroperoxide and p-menthane peroxide; an azo-based initiator such as azobisisobutylonitrile and 2,2-azobis(2-amidinopropane) dihydrochloride; further, a redox initiator comprising a peroxide compound combined with a reductant such as sodium hydrogen sulfite.

The amount of the reactive surfactant composition in the present invention used at producing the polymer emulsion is preferably 0.1 to 20 parts by weight and more preferably 0.5 to 5 parts by weight per 100 parts by weight of the monomer(s) in view of dispersion-stability and water resistance of the film. A conventional surfactant having no reactive groups or polymer surfactants can be used in combination with the reactive surfactant composition of the present invention. However, the amount thereof to be used is not more than 2 parts by weight and preferably not more than 1 part by weight per 100 parts by weight of the monomer(s) in view of decreasing the burden on treating the waste water or preventing the lowering of the polymer physical property.

The emulsion paint of the present invention is obtained by mixing the polymer emulsion obtained by the producing method of the present invention and one or more components selected from the group consisting of a color pigment, a body extender pigment and various paint additives. The color pigment can include, for example, an inorganic pigment such as titanium oxide, carbon black, various iron oxide pigments, chromium oxide and ultramarine, and an organic pigment such as phthalocyanine blue, phthalocyanine green, quinacridone red and hansa (or hanza) yellow. The body extender pigment can include, for example, calcium carbonate, clay, talc, mica and finely powdery silica. The additive can include, for example, a thickener (or viscosity improver) such as methyl cellulose, hydroxyethylcellulose, carboxymethyl cellulose, polyvinyl alcohol and sodium polyacrylate; a coalescing agent such as methoxy ethanol, ethoxy ethanol, n-butoxy ethanol, diethyleneglycol monoethyl ether, diethyleneglycol monobutyl ether, an acetate of ethoxy ethanol, butyl acetate, xylene and benzyl alcohol; a dispersant such as sodium tripolyphosphate, sodium hexametaphosphate, a condensate of sodium alkyl naphthalene sulfonate and formaldehyde, sodium or ammonium polyacrylate (low degree of polymerization); a wetting agent such as a polyoxyethylene fatty acid ester, a polyoxyethylene alkyl phenyl ether and polyoxyethylene sulfosuccinic acid ester salts; besides, a defoaming agent, a preservative, a fungicide and a freeze thaw stabilizer, and the like, respectively. As regard to the mixing ratio of the polymer emulsion and the pigment component, the ratio of the solid content of the pigment component to the solid content of the polymer emulsion is preferably 30/70 to 5/95 by volume.

When the reactive surfactant composition of the present invention is used as the emulsifier for the emulsion polymerization, the emulsion having its good polymerization-stability can be obtained without making the particle diameter coarse using together no the conventional emulsifier.

### Examples

### Examples 1-1 to 1-5 and Comparative Examples 1-1 to 1-4

The reactive surfactant compositions of the present invention and Comparative reactive surfactant compositions were prepared at the blending ratio shown in Table 1 by using the following (a-1) and (a-2) as the component (a) and using the following (b-1), (b-2) and (b-3) for the component (b).

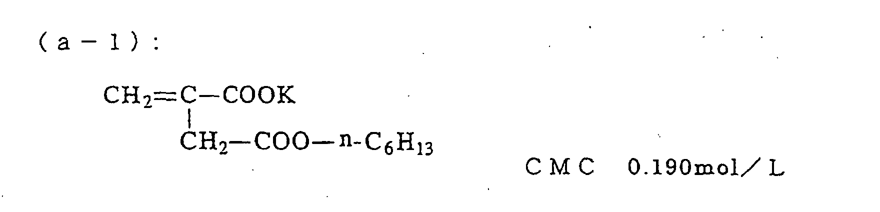

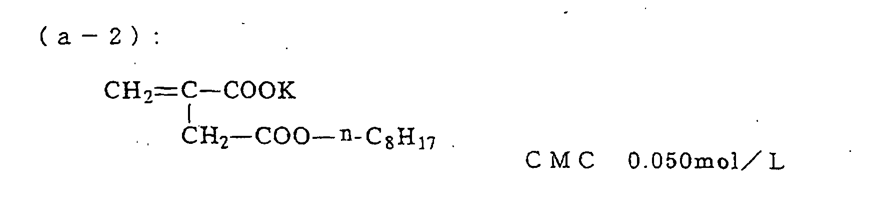

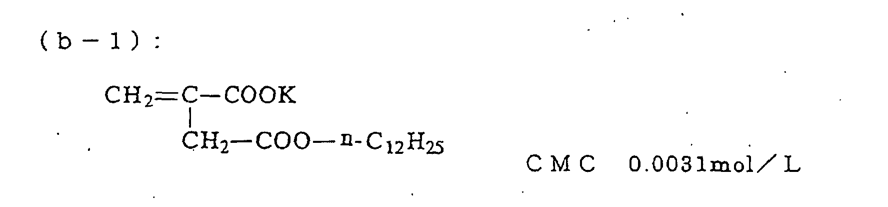

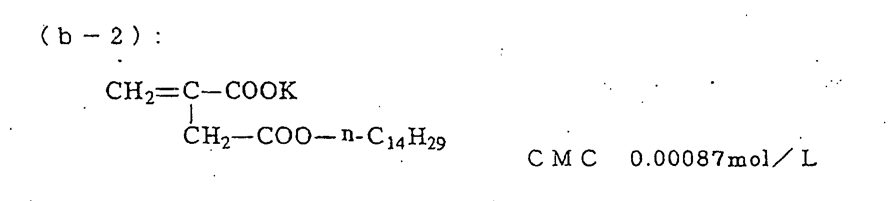

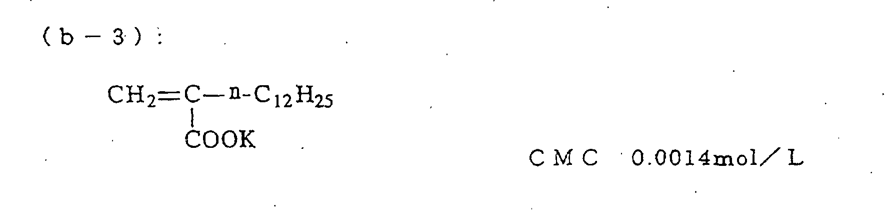

Here, CMC was measured by the following method.

### <Measuring method for CMC>

100 mL of distilled water was taken in a beaker and the conductance was measured with stirring (using the conductometric meter of CM-20S model supplied by TOA Electronics Ltd., cell CG-511B). A reactive surfactant solution adjusted previously to a predetermined concentration was added dropwise every by 0.2 mL into the beaker. Every adding dropwise, the conductance was read (at the temperature 25°C). If the concentration of the reactive surfactant in the titration liquid is made to x mol/L and the amount of the titration liquid is made to y ml, the surfactant-concentration C of the solution in the beaker is expressed as C = x^{·}y/(100+y). The break (bending point) in the conductance versus concentration curve appears at CMC.

The reactive surfactant composition prepared above was used to conduct the emulsion polymerization by batch method shown below. The obtained polymer emulsion was evaluated by the following method. The results are shown in Table 1.

### <Batch method>

71.5 g of deionized water, 1 g of the reactive surfactant composition as solid, 50 g of styrene and 7.5 g of a 2% aqueous solution of potassium persulfate were charged in a 250 ml glass bottle to be purged with nitrogen gas. This bottle was set to a bottle-rotating machine controlled at the temperature of 60°C. Then, polymerization was conducted under stirring by rotation for 3 hours.

### <Polymerization-stability>

The polymer emulsion was filtered through a 200-mesh gage made of stainless steel. The coagula adhered onto a reactor-wall, stirring blade, etc. after the polymerization was also collected and filtered in the same way. They were washed with deionized water and then to dry under a reduced pressure (26.6 kPa) at 150°C for 2 hours. Thus, the amount of the coagula was determined. The polymerization-stability was indicated as % by weight of the amount of the coagula to the total amount of monomers used.

### <Average particle diameter>

Average particle diameter (weight average) of the polymer emulsion particles was measured by using a dynamic light scattering apparatus (N-4SD) supplied Coulter Elactoronics Inc.

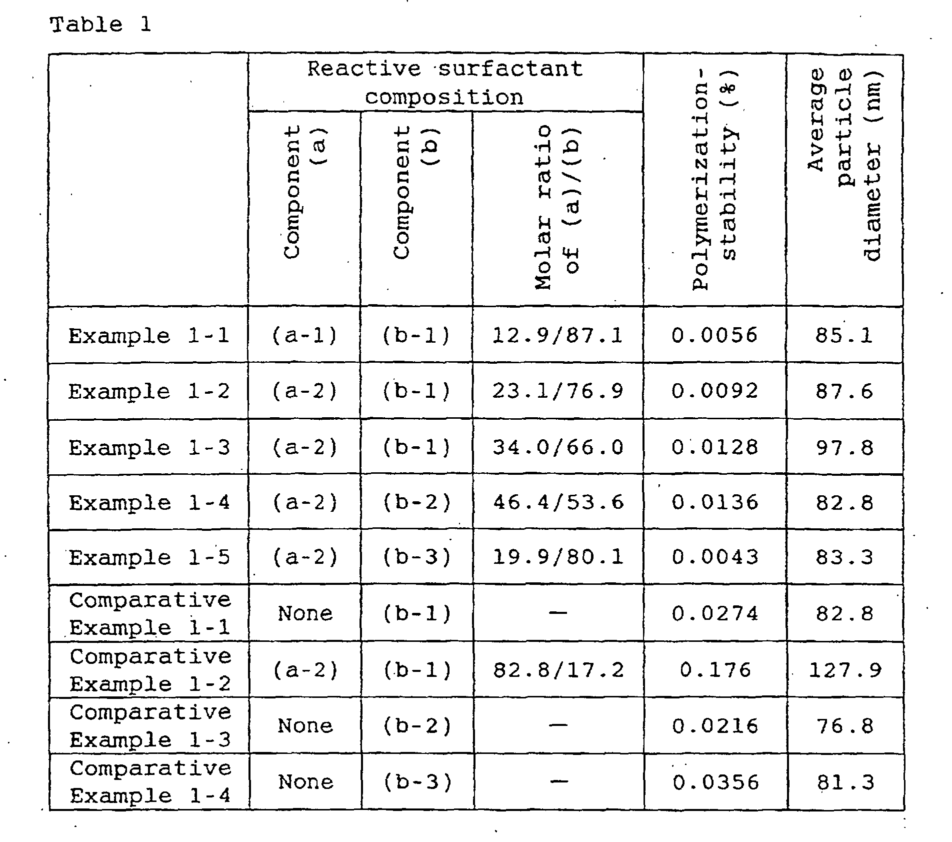

It is apparent from Table 1 that the polymerization-stability was good and the particle diameter was small in Examples but polymerization-stability was poor in Comparative Examples and then the particle diameter becomes large in

### Comparative Example 1-2.

Examples 2-1 to 2-6 and Comparative Examples 2-1 to 2-4

The reactive surfactant compositions of the present invention and Comparative reactive surfactant compositions were prepared at the blending ratio shown in Table 2 by using the following (a-3) and (a-4) as the component (a) and the following (b-4), (b-5), (b-6) and (b-7) as the component (b).
(a - 3) : Mixture of 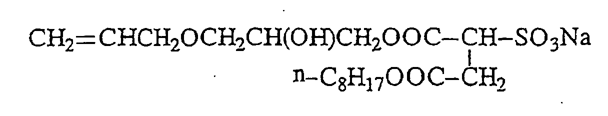 and 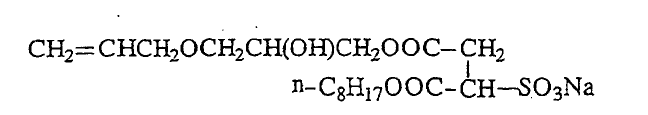 (prepared by the process described in JP-A 58-203960)
   C M C 0.025mol/L
(a-4) : 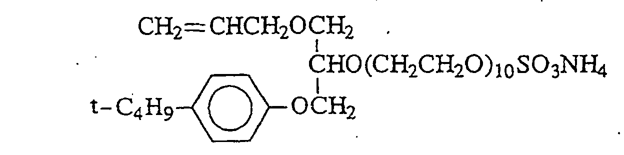 C M C 0.025mol/L
(b - 4) : Mixture of 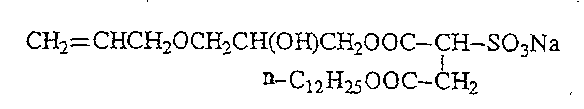 and 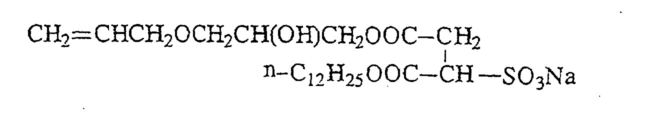 (prepared by the process described in JP-A 58-203960)
   C M C 0.0016mol/L
(b - 5) : 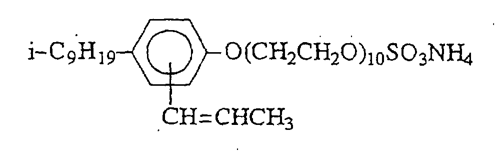 C M C 0.00087mol/L
(b-6) : 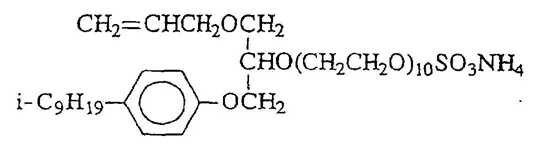 C M C 0.0017mol/L
(b-7) : 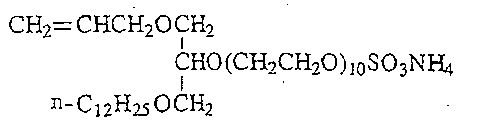 C M C 0.0025mol/L 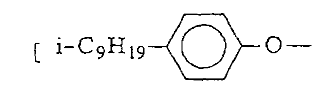
is a group derived from nonyl phenol obtained by reacting propylene trimer with phenol.]

Emulsion polymerization was conducted by the emulsion addition method shown below using the reactive surfactant composition prepared as described above. The obtained polymer emulsion was evaluated by the above-mentioned method. The results are shown in Table 2.

### <Emulsion addition method>

2.5 g of acrylic acid, 123.75g of butyl acrylate and 123.75g of methyl methacrylate were charged in a 500 ml beaker to prepare a monomer mixture. 5.0g of the reactive surfactant composition and 0.50 g of potassium persulfate were dissolved in 107.1 g of deionized water. They were added to the monomer mixture described above and then mixed to stir at 5000 r/min with a homogenizing mixer for 10 minutes. Thus, a homogenized monomer emulsion was obtained.

137.9 g of deionized water and 36.2g of the above-mentioned monomer emulsion were charged in a 1 L separable flask and stirred under nitrogen gas stream for 30 min. Then, the flask was put in a water bath at 80°C and heated. Initial polymerization was conducted for 30 min and the remaining monomer emulsion was added dropwise for 3 hours. During that period, the temperature in the flask was kept at 80 ± 2°C. After completion of the dropping, the mixture was kept at 80 °C for 1 hour. Then, it was cooled to a room temperature in order to obtain a polymer emulsion.

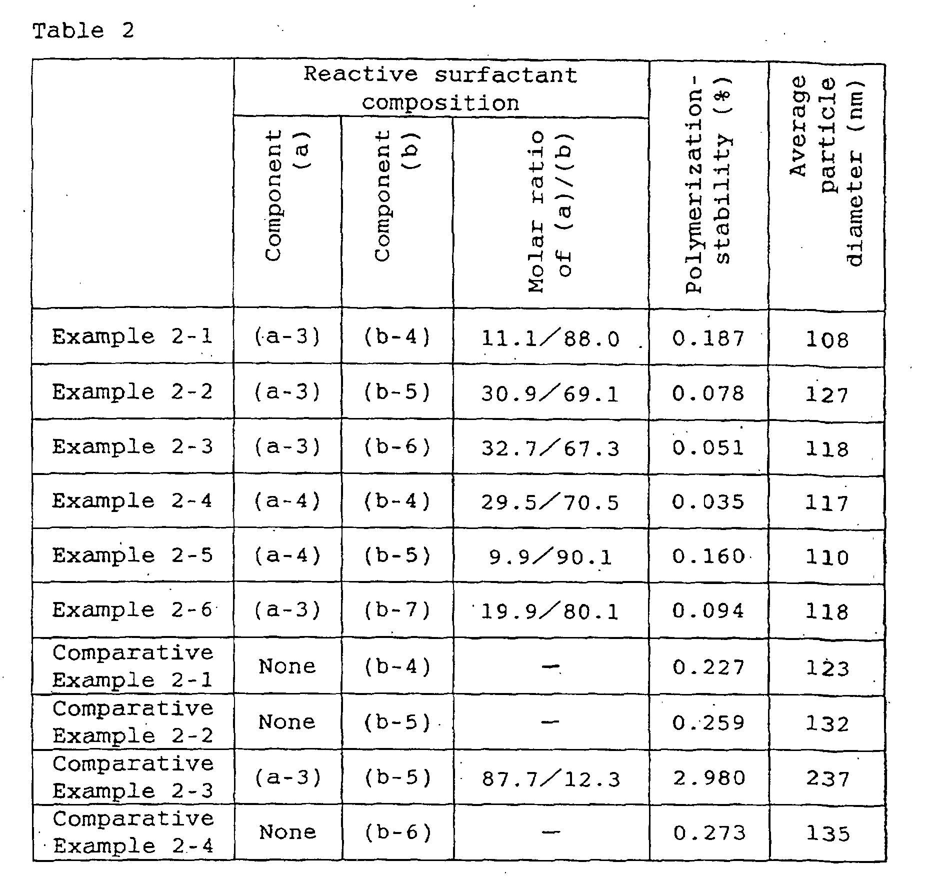

### Examples 3-1 to 3-4 and Comparative Examples 3-1 to 3-3

The reactive surfactant composition of the present invention and Comparative reactive surfactant compositions were prepared at the blending ratio shown in Table 3 by using the following (a-5) and the above described (a-4) as the component (a) and the following (b-8) and the above described (b-5) and (b-6) as the component (b).

In these examples, emulsion polymerization was conducted by the exactly same procedure as the emulsion addition method described in Examples 2-1 to 2-6 except that monomer mixture was replaced to butyl acrylate. The results of evaluations are shown in Table 3.
(a - 5) : 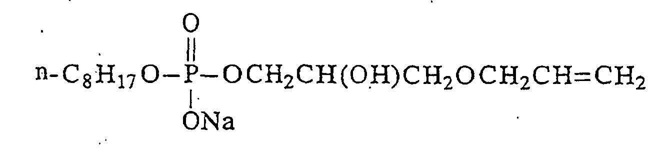 C M C 0.040mol/L
(b - 8) : 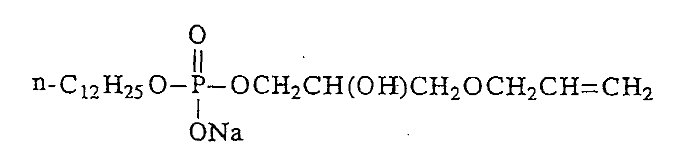 C M C 0.004mol/L

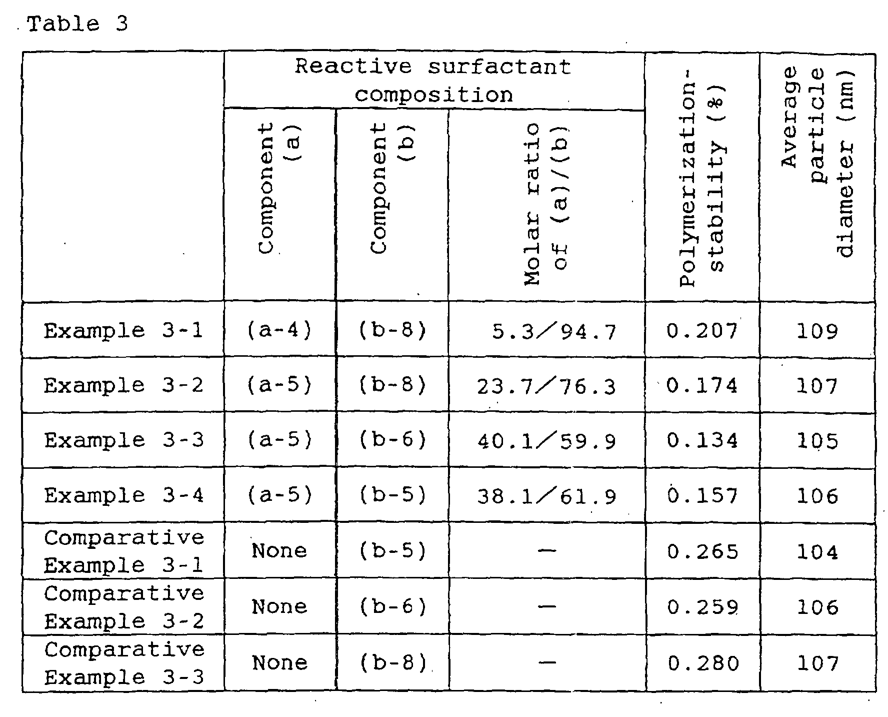

## Claims

1. A reactive surfactant composition comprising
(a) a reactive surfactant having one reactive group selected from the group of a vinyl group, an allyl group and a group having the formula (1) and one anionic hydrophilic group in the molecule thereof, having critical micelle concentration (CMC) in the range between 0.02 mol/L and 0.2 mol/L and
(b) a reactive surfactant having one reactive group selected from the group of a vinyl group, an allyl group and a group having the formula (1) and one anionic hydrophilic group in the molecule thereof, having critical micelle concentration (CMC) in the range between 0.0005 mol/L and 0.005 mol/L
at a molar ratio of (a) to (b) in the range between 5/95 and 60/40: 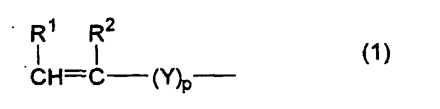
in which R¹ and R² are hydrogen or -CH₂X and are not the same as each other; and X is hydrogen or a substituent; Y is carbonyl group or methylene group; and p is zero or 1.

2. The surfactant composition as claimed in the Claim 1, in which the reactive surfactants have molecular weight of 2000 or less.

3. The surfactant composition as claimed in Claim 1 or 2 in which the molar ratio of (a) to (b) ranges between 10/90 and 40/60.

4. Use of the surfactant composition as defined in any one of the Claims 1 to 3 as an emulsifier for emulsion polymerisation.

5. A method of conducting an emulsion polymerisation in the presence of the surfactant composition as defined in any one of the Claims 1 to 3.

6. The method as claimed in the Claim 5, in.which the surfactant composition is added in an amount of 0.1 to 20 parts by weight per 100 parts by weight of the monomer(s).

7. A paint composition comprising a pigment and the polymer emulsion obtained by the method as defined in the Claim 5.

## Patentansprüche

1. Reaktive Tensidzusammensetzung, umfassend
(a) ein reaktives Tensid mit einer reaktiven Gruppe, ausgewählt aus der Gruppe aus einer Vinylgruppe, Allylgruppe und einer Gruppe mit der Formel (1) und einer anionischen hydrophilen Gruppe im Molekül davon, mit einer kritischen Micellkonzentration (CMC) im Bereich zwischen 0,02 und 0,2 mol/l und
(b) ein reaktives Tensid mit einer reaktiven Gruppe, ausgewählt aus der Gruppe aus einer Vinylgruppe, Allylgruppe und einer Gruppe mit der Formel (1) und einer anionischen hydrophilen Gruppe im Molekül davon, mit einer kritischen Micellkonzentration (CMC) im Bereich zwischen 0,0005 und 0,005 mol/l
bei einem molaren Verhältnis von (a) zu (b) im Bereich zwischen 5/95 und 69/40: 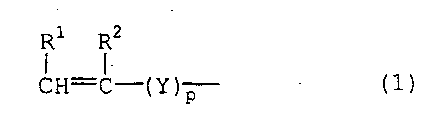 worin R¹ und R² Wasserstoff oder -CH₂X sind und nicht gleich zueinander sind; und X Wasserstoff oder ein Substituent ist; Y eine Carbonylgruppe oder Methylengruppe ist und p 0 oder 1 ist.

2. Tensidzusammensetzung nach Anspruch 1, worin die reaktiven Tenside ein Molekulargewicht von 2000 oder weniger haben.

3. Tensidzusammensetzung nach Anspruch 1 oder 2, worin das molare Verhältnis von (a) zu (b) im Bereich zwischen 10/90 und 40/60 liegt.

4. Verwendung der Tensidzusammensetzung wie in einem der Ansprüche 1 bis 3 definiert, als Emulgator für die Emulsionspolymerisation.

5. Verfahren zur Durchführung einer Emulsionspolymerisation in der Gegenwart der Tensidzusammensetzung wie in einem der Ansprüche 1 bis 3 definiert.

6. Verfahren nach Anspruch 5, worin die Tensidzusammensetzung in einer Menge von 0,1 bis 20 Gewichtsteilen pro 100 Gewichtsteilen des bzw. der Monomeren zugegeben wird.

7. Farbzusammensetzung, umfassend ein Pigment und die Polymeremulsion, erhalten durch das Verfahren wie in Anspruch 5 definiert.

## Revendications

1. Composition tensioactive réactive comprenant
(a) un tensioactif réactif ayant un groupe réactif choisi dans le groupe d'un groupe vinyle, d'un groupe allyle et d'un groupe ayant la formule (1) et un groupe hydrophile anionique dans la molécule de celui-ci, ayant une concentration micellaire critique (CMC) dans la gamme entre 0,02 mole/L et 0,2 mole/L et
(b) un tensioactif réactif ayant un groupe réactif choisi dans le groupe d'un groupe vinyle, d'un groupe allyle et d'un groupe ayant la formule (1) et un groupe hydrophile anionique dans la molécule de celui-ci, ayant une concentration micellaire critique (CMC) dans la gamme entre 0,0005 mole/L et 0,005 mole/L
à un rapport molaire de (a) sur (b) dans la gamme entre 5/95 et 60/40 : 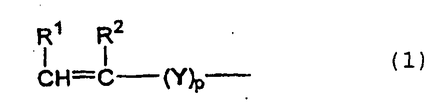 dans laquelle R¹ et R² sont un hydrogène ou -CH₂X et ne sont pas les mêmes l'un et l'autre ; et X est un hydrogène ou un substituant ; Y est un groupe carbonyle ou un groupe méthylène ; et p est zéro ou 1.

2. Composition tensioactive comme revendiquée dans la revendication 1, dans laquelle les tensioactifs réactifs ont un poids moléculaire de 2000 ou moins.

3. Composition tensioactive comme revendiquée dans la revendication 1 ou 2, dans laquelle le rapport molaire de (a) sur (b) se situe dans la gamme entre 10/90 et 40/60.

4. Utilisation d'une composition tensioactive comme définie dans l'une quelconque des revendications 1 à 3 en tant qu'émulsifiant pour une polymérisation en émulsion.

5. Procédé de conduite d'une polymérisation en émulsion en présence de la composition tensioactive comme définie dans l'une quelconque des revendications 1 à 3.

6. Procédé comme revendiqué dans la revendication 5, dans lequel la composition tensioactive est ajoutée en une quantité de 0,1 à 20 parties en poids pour 100 parties en poids du(des) monomère(s).

7. Composition de peinture comprenant un pigment et l'émulsion polymère obtenue par le procédé comme défini dans la revendication 5.
